# EUROPÄISCHE PATENTSCHRIFT

(11) **EP 1 171 259 B1**
(45) Veröffentlichungstag und Bekanntmachung des Hinweises auf die Patenterteilung: **05.03.2003**
(21) Anmeldenummer: 00929393.7
(22) Anmeldetag: 19.04.2000
(51) Int. Cl.: B23D 31/00

(54) **VERFAHREN UND VORRICHTUNG ZUM BRUCHTRENNEN EINES WERKSTÜCKS**
METHOD AND DEVICE FOR FRACTURE-SEPARATING A WORKPIECE
PROCEDE ET DISPOSITIF POUR LA DIVISION PAR RUPTURE D'UNE PIECE

(30) Priorität: 21.04.1999 DE 19918063
(43) Veröffentlichungstag der Anmeldung: 16.01.2002
(73) Patentinhaber: Alfing Kessler Sondermaschinen GmbH, 73433 Aalen (DE)
(72) Erfinder: HÄHNEL, Michael, D-73457 Essingen (DE); WISNIEWSKI, Horst, D-72762 Reutlingen (DE)
(74) Vertreter: HOFFMANN - EITLE
(86) Internationale Anmeldenummer: EP0003577
(87) Internationale Veröffentlichungsnummer: WO00064616

(56) Entgegenhaltungen:
- WO-A-95/28248
- DE-A- 19 547 388
- US-A- 4 684 267

## Beschreibung

### TECHNISCHES GEBIET

Die Erfindung betrifft ein Verfahren und eine Vorrichtung zum Bruchtrennen eines Werkstücks mit einem oder aber mehreren axial fluchtend hintereinander angeordneten ringartigen Werkstückabschnitten.

### STAND DER TECHNIK

Aus der DE 197 04 131 A1 ist ein Verfahren zum Bruchtrennen eines Werkstücks mit einem oder mehreren axial fluchtend hintereinander angeordneten ringartigen Werkstückabschnitten bekannt, wobei das Verfahren die folgenden Schritte umfaßt. Zunächst werden in den durch die ringartigen Werkstückabschnitte gebildeten Bohrungen jeweils zwei einander diametral gegenüberliegende Bruchkerben hergestellt. Dies erfolgt üblicherweise in einer eigens für diesen Zweck vorgesehenen Bearbeitungsstation. Nach der Fertigung der Bruchkerben wird das Werkstück der Bearbeitungsstation entnommen, zu einer speziellen Spann- und Stützvorrichtung überführt und dort zum eigentlichen Bruchtrennen fixiert. Zwischen der Entnahme und dem Fixieren kann oder muß das Werkstück ggf. auch noch über einen bestimmten Zeitraum zwischengelagert werden. Anschließend wird eine Spreizeinrichtung axial in die durch die ringartigen Werkstückabschnitte gebildeten Bohrungen eingeführt und zum Bruchtrennen von mindestens einem ringartigen Werkstückabschnitt aufgespreizt. Die in der DE 197 04 131 A1 offenbarte Vorrichtung zur Durchführung dieses Verfahrens umfaßt eine Spann- und Stützvorrichtung zum Fixieren des Werkstücks und eine Spreizeinrichtung, die in die durch die ringartigen Werkstückabschnitte gebildeten Bohrungen axial einführbar und aufspreizbar ist.

Ein vergleichbares Verfahren und eine vergleichbare Vorrichtung sind ferner jeweils in der WO 95/28248, der EP 0 167 320 B1 sowie der US-P 4 684 267 offenbart.

### DARSTELLUNG DER ERFINDUNG

Der Erfindung liegt das technische Problem zugrunde, ein Verfahren zum Bruchtrennen eines Werkstücks sowie eine für ein derartiges Verfahren geeignete Vorrichtung zum Bruchtrennen eines Werkstücks zu schaffen, mit denen auf möglichst einfache und effektive Art und Weise die Bearbeitung des Werkstückes weiter rationalisiert sowie der vorrichtungstechnische Aufwand für die Fertigung reduziert werden kann.

Das vorhergenannte technische Problem wird gelöst durch ein erfindungsgemäßes Verfahren mit den Merkmalen des Anspruchs 1.

Dieses Verfahren zum Bruchtrennen eines Werkstücks mit einem oder mehreren axial fluchtend hintereinander angeordneten ringartigen Werkstückabschnitten, umfaßt folgende Schritte: Fixieren des Werkstückes zum Bruchtrennen; axiales Einführen von mindestens einer Spreizeinrichtung in mindestens eine durch einen jeweiligen ringartigen Werkstückabschnitt gebildete Bohrung; Herstellen von mindestens einer Bruchkerbe in wenigstens einer Bohrung während und/oder nach dem axialen Einführen der Spreizeinrichtung; und Aufspreizen der Spreizeinrichtung zum Bruchtrennen von mindestens einem ringartigen Werkstückabschnitt.

Die Herstellung der Bruchkerbe erfolgt vorzugsweise mit einer Trenneinrichtung, wie sie nachfolgend noch genauer im Zusammenhang mit der erfindungsgemäßen Vorrichtung beschrieben werden wird. Die Bruchkerbenherstellung kann hierbei ausgehend von sowohl nur einer als auch von beiden axialen Seiten der durch einen jeweiligen ringartigen Werkstückabschnitt gebildeten Bohrung ausgeführt werden. Falls in dem erfindungsgemäßen Verfahren zwei Spreizeinrichtungen verwendet werden, so ist es darüber hinaus ebenfalls möglich, die Spreizeinrichtungen von zwei gegenüberliegenden axialen Seiten her in eine oder mehrere durch einen jeweiligen ringartigen Werkstückabschnitt gebildete Bohrungen einzuführen.

Mit dem erfindungsgemäßen Verfahren kann die mindestens eine Bruchkerbe direkt am bereits für das Bruchtrennen vorbereitend fixierten Werkstück während und/oder (unmittelbar) nach dem Einführen der Spreizeinrichtung, jedoch noch vor dem eigentlichen Bruchtrennvorgang, hergestellt werden. Vorzugsweise wird die Bruchkerbe entweder während oder nach dem Einführen der Spreizeinrichtung vollständig ausgearbeitet. Es ist jedoch ebenso denkbar, während des Einführens nur einen Teil der Bruchkerbe auszubilden und den anderen Teil erst nach dem teilweisen oder vollständigen Einführen der Spreizeinrichtung zu fertigen.

Auf einen vorab durchzuführenden zusätzlichen Herstellungsschritt für die mindestens eine Bruchkerbe und die Bereitstellung einer eigens dafür vorgesehenen Bearbeitungsstation, wie es beim Stand der Technik erforderlich ist, kann bei dem erfindungsgemäßen Verfahren also verzichtet werden. Damit entfallen auch die Schritte zum Entnehmen des Werkstückes aus der besagten Bearbeitungsstation und zum Überführen und Umspannen des Werkstückes in die für das Bruchtrennen verwendete Spann- und Stützvorrichtung. Auch eine etwaige externe Zwischenlagerung des Werkstückes in dem Zeitraum zwischen der Herstellung der Bruchkerbe und dem eigentlichen Bruchtrennen ist überflüssig.

Die Bearbeitung des Werkstückes bis einschließlich des Bruchtrennvorgangs kann deshalb beträchtlich beschleunigt und vereinfacht werden. Das erfindungsgemäße Verfahren gestattet es somit auf vergleichsweise einfache und effektive Art und Weise die Bearbeitung des Werkstückes erheblich zu rationalisieren sowie den vorrichtungstechnischen Aufwand für die Fertigung zu reduzieren. Das erfindungsgemäße Verfahren ist beispielsweise sowohl für
a) ein einzelnes Werkstück mit einem einzelnen ringartigen Werkstückabschnitt,
b) einer axial fluchtenden sequentiellen Anordnung von mehreren einzelnen Werkstücken mit einem einzelnen ringartigen Werkstückabschnitt,
c) für ein oder mehrere Werkstücke mit mehreren axial fluchtend hintereinander angeordneten ringartigen Werkstückabschnitten, als auch
d) für Kombinationen aus a) - c) anwendbar.

Weitere vorteilhafte Ausführungsmerkmale des erfindungsgemäßen Verfahrens sind Gegenstand der zugehörigen Unteransprüche 2 bis 9.

Das der Erfindung zugrundeliegende technische Problem wird des weiteren gelöst durch eine erfindungsgemäße Vorrichtung mit den Merkmalen des Anspruchs 10.

Diese Vorrichtung zum Bruchtrennen eines Werkstücks mit einem oder mehreren axial fluchtend hintereinander angeordneten ringartigen Werkstückabschnitten umfaßt: mindestens eine Spann- und Abstützvorrichtung zum Fixieren des Werkstückes zum Bruchtrennen; mindestens eine Spreizeinrichtung, die in wenigstens eine durch einen jeweiligen ringartigen Werkstückabschnitt gebildete Bohrung axial einführbar und aufspreizbar ist; und mindestens eine im wesentlichen am Umfang der Spreizeinrichtung angeordnete und mit dieser in Axialrichtung mitbewegbare Trenneinrichtung zum Herstellen von wenigstens einer Bruchkerbe in mindestens einer der Bohrung während und/oder nach dem axialen Einführen der Spreizeinrichtung.

Bei der Trenneinrichtung (die hinsichtlich ihrer Funktion zur Herstellung der Bruchkerbe nicht mit den für das eigentliche Bruchtrennen des Werkstücks vorgesehenen Mitteln zu verwechseln ist) handelt es sich vorzugsweise um eine Trenneinrichtung mit mindestens einer geometrisch bestimmten Schneide. Die Erfindung ist indes nicht ausschließlich auf diesen Trenneinrichtungstyp beschränkt. Ebenso kann die Trenneinrichtung über geometrisch unbestimmte Schneiden verfügen (z.B. als Schleifwerkzeug) oder sogar als Trenneinrichtung ausgestaltet sein, bei welcher der Trennvorgang nach einem thermischen, chemischen oder elektrochemischen Abtragungsprinzip funktioniert, zum Beispiel im Rahmen einer Funkenerosionseinrichtung oder einer Laserschneideinrichtung, und dergleichen. Kombinationen aus den einzelnen Trenneinrichtungstypen sind ebenso denkbar.

Die zur Herstellung der mindestens einen Bruchkerbe benötigte Trennwirkung der Trenneinrichtung kann hierbei während des Einführens der Spreizeinrichtung, an der die Trenneinrichtung angeordnet ist, beispielsweise durch eine aufgrund der axialen Einführbewegung erzeugte Relativbewegung zwischen der Trenneinrichtung und der Bohrung, an der die Bruchkerbe anzubringen ist, oder durch eine kombinierte Relativbewegung zwischen Trenneinrichtung, Spreizeinrichtung und Werkstück erzielt werden. Bei einer Bruchkerbenherstellung nach dem Einführen der Spreizeinrichtung hingegen bleibt die Position der Spreizeinrichtung in Bezug auf die Bohrung vorzugsweise konstant, und es wird lediglich eine Relativbewegung zwischen der Trenneinrichtung und der betreffenden Werkstückoberfläche und/oder der stillstehenden Spreizeinrichtung ausgeführt. Für beide Fälle gilt jedoch, daß die Zustellbewegung der Trenneinrichtung in Bezug auf die Werkstückoberfläche der Bohrung nicht nur sich im wesentlichen parallel zur axialen Einführrichtung sondern auch in einem Winkel dazu erstreckende Komponenten enthalten kann.

Da die Trenneinrichtung, wie zuvor erwähnt, an der Spreizeinrichtung angeordnet ist, kann die Spreizeinrichtung zweckmäßigerweise als Antriebs- und/oder Zustelleinrichtung für die Trenneinrichtung dienen. Ebenso ist es im Sinne der Erfindung aber auch möglich, daß die Trenneinrichtung über eine von der Spreizeinrichtung unabhängige Antriebs- und/oder Zustelleinrichtung verfügt.

Die erfindungsgemäße Vorrichtung bietet die bereits eingehend im Zusammenhang mit dem erfindungsgemäßen Verfahren erläuterten Vorteile. Aufgrund der Anordnung der Trenneinrichtung an der Spreizeinrichtung übt die Spreizeinrichtung darüber hinaus eine vorteilhafte Doppelfunktion aus, da die gewissermaßen als funktionales Teilelement der Trenneinrichtung fungiert und zusammen mit dieser die Zusatzfunktion einer ansonsten erforderlichen separaten Bearbeitungsstation zur Bruchkerbenherstellung übernimmt. Die erfindungsgemäße Vorrichtung verfügt damit über eine Art kombiniertes Bruchkerbenherstellungs/Brechwerkzeug.

Weitere vorteilhafte Ausgestaltungsmerkmale der erfindungsgemäßen Vorrichtung sind Gegenstand der zugehörigen Unteransprüche 11 bis 19.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: eine schematische, stark vereinfachte Querschnittsansicht einer erfindungsgemäßen Vorrichtung zum Bruchtrennen eines Werkstücks;
- Fig. 2: eine schematische Seitenansicht einer in der Vorrichtung von Fig. 1 vorgesehenen Spreizeinrichtung gemäß einer ersten Ausführungsform;
- Fig. 3: eine schematische Frontalansicht der Spreizeinrichtung von Fig. 2;
- Fig. 4: eine schematische Querschnittsansicht eines Lagerdeckelbereichs eines in Fig. 1 dargestellten Gehäuseblocks; und
- Fig. 5: eine schematische, stark vereinfachte Querschnittsansicht einer in der Vorrichtung von Fig. 1 verwendbaren Spreizeinrichtung gemäß einer zweiten Ausführungsform.

### BESCHREIBUNG VON AUSFÜHRUNGSBEISPIELEN DER ERFINDUNG

In der nachfolgenden Beschreibung und in den Figuren werden zur Vermeidung von Wiederholungen gleiche Bauteile und Komponenten auch mit gleichen Bezugszeichen gekennzeichnet, sofern keine weitere Differenzierung erforderlich ist.

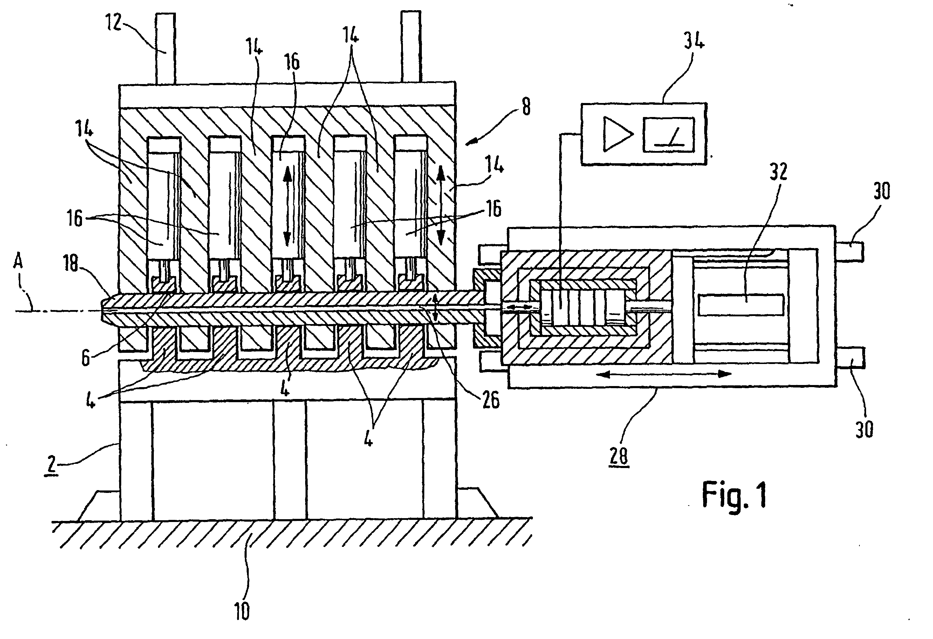

In der Fig. 1 ist eine schematische Querschnittsansicht einer erfindungsgemäßen Vorrichtung zum Bruchtrennen eines Werkstücks 2 mit mehreren axial fluchtend hintereinander angeordneten ringartigen Werkstückabschnitten 4 zu erkennen. Bei dem zu bearbeitenden Werkstück 2 handelt es sich im vorliegenden Beispiel um einen Gehäuseblock 2 mit fünf integral ausgebildeten ringartigen Werkstückabschnitten 4, nachfolgend Lagerdeckel 4 genannt, die fünf in Axialrichtung voneinander beabstandete fluchtende Bohrungen 6 umschließen, die zur Lagerung von Kurbelwellen, Nockenwellen oder dergleichen dienen und eine gemeinsame Lagerachse A besitzen. Die Lagerdeckel 4 sollen durch Bruchtrennen von dem verbleibenden Gehäuseblock 2 gelöst werden, so daß sich an einer vorbestimmten Bruchebene eine jeweils individuelle Makroverzahnung am Materialgefüge der abgetrennten Lagerdeckel 4 und des verbleibenden Gehäuseblocks 2 ausbildet und eine genau zusammenpassende Paarung zwischen einem jeweiligen Lagerdeckel und seinem zugehörigen Gehäuseblockabschnitt entsteht.

Die Vorrichtung umfaßt eine Spann- und Abstützvorrichtung 8, mit der der Gehäuseblock 2 zum Bruchtrennen positioniert und fixiert wird. Die Spann- und Abstützvorrichtung 8 verfügt über eine ortsfeste untere Werkstückaufnahme 10 sowie eine über einen Schlitten 12 rechtwinkelig zur Lagerachse A zustellbare Werkstückgegenhalterung 14 mit einer ebenfalls rechtwinkelig zur Lagerachse A zustellbaren Lagerdeckelabstützung 16. Die Zustellbarkeit der Werkstückgegenhalterung 14 und der Lagerdeckelabstützung 16 ist in der Zeichnung durch Doppelpfeile angedeutet. Die zugehörigen Zustellmechanismen, die hydraulische, elektromechanische oder anderen geeignete Stellglieder aufweisen können, sind der besseren Übersichtlichkeit halber nicht dargestellt.

Ferner umfaßt die Vorrichtung eine Spreizeinrichtung mit einem langgestreckten Spreiz- bzw. Brechdorn 18, der entlang der Lagerachse A axial in die Bohrungen 6 einführbar und zur Erzeugung einer Bruchtrennkraft aufspreizbar ist, wie in der Zeichnung durch einen Doppelpfeil angedeutet. Die Länge des Brechdorns 18 ist im vorliegenden Fall so bemessen, daß er im eingeführten Zustand durch sämtliche Bohrungen 6 des Gehäuseblocks 2 hindurch reicht. Der Brechdorn 18 besitzt zwei nachfolgend noch näher beschriebene Brechdornhälften.

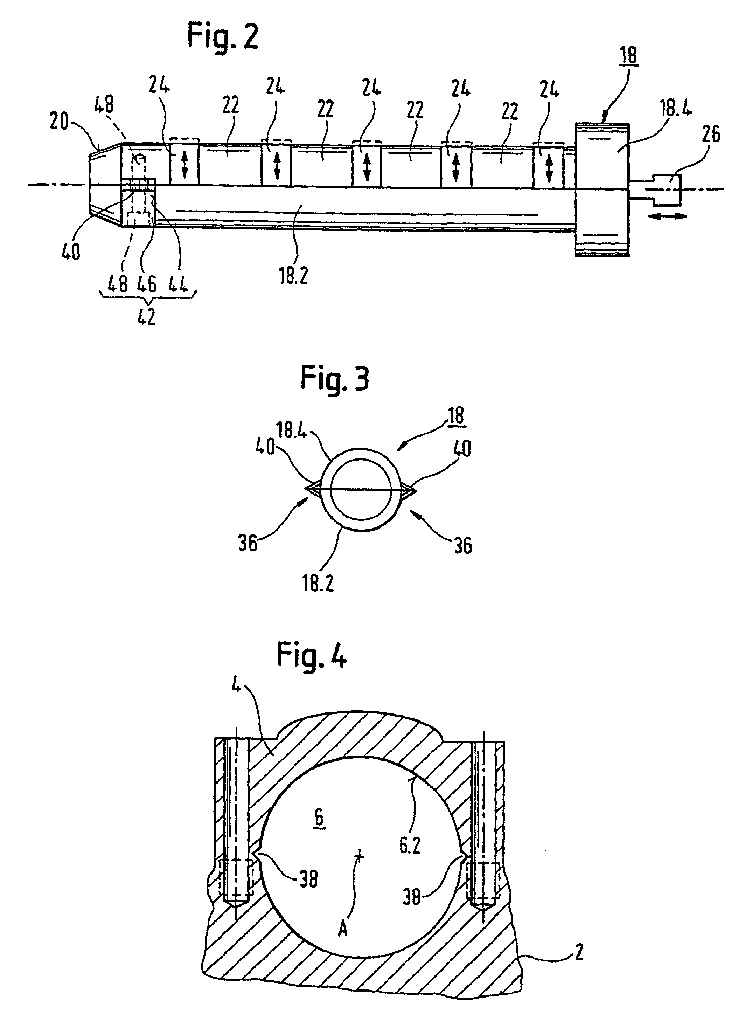

In der Fig. 2, die eine schematische Seitenansicht der in der Vorrichtung von Fig. 1 vorgesehenen Spreizeinrichtung gemäß einer ersten Ausführungsform darstellt, sind weitere Details des Brechdorns 18 erkennbar. Das vordere Ende 20 des Brechdorns 18 ist leicht konisch ausgebildet, was das Einführen des Brechdorns 18 in die Bohrungen 6 erleichtert. Die Außenkontur des Brechdorns 18 ist im wesentlichen kreisförmig. Der Außendurchmesser des Brechdorns 18 ist geringfügig kleiner als der Innendurchmesser der Bohrungen 6. Die erste Brechdornhälfte 18.2 ist in ihrer Längserstreckung durchgehend ausgebildet. Die zweite Brechdornhälfte 18.4 besitzt in Axialrichtung voneinander beabstandete Führungsstücke 22, die an der ersten Brechdornhälfte 18.2 fixiert sind. Zwischen benachbarten Führungsstücken 22 ist jeweils ein in seiner Außenkontur im wesentlichen halbkreisförmiges, bewegliches Brechsegment 24 eingefügt, wobei ein jeweiliges Brechsegment 24 hinsichtlich seiner Anordnung und Funktion einem jeweiligen Lagerdeckel 4 zugeordnet ist. Insgesamt sind hier also fünf Brechsegmente 24 vorhanden. Die Brechsegmente 24 sind mittels eines zwischen den beiden Brechdornhälften 18.2, 18.4 verlaufenden langgestreckten Brechsegment-Betätigungselementes 26 relativ zu der ersten Brechdornhälfte 18.2 in radialer Richtung, d.h. senkrecht zur Lagerachse A, gemeinsam beweglich (in Fig. 2 durch gestrichelte Linien angedeutet), wodurch die Aufspreizwirkung des Brechdorns 18 erzielt und an einem jeweiligen Lagerdeckel 4 eine Brechkraft ausgeübt wird.

Das dem Gehäuseblock 2 abgewandte Ende des Brechdorns 18 ist mit einer Zustell- und Betätigungseinrichtung 28 (vergl. Fig. 1) verbunden, mit der der Brechdorn 18 über einen in Lagerachsenrichtung verfahrbaren Schlitten 30 in axialer Richtung in die Bohrungen 6 eingeführt und nach Abschluß des Bruchtrennvorgangs wieder zurückgezogen werden kann. Die Verfahrbarkeit der Zustell- und Betätigungseinrichtung 28 und damit des Brechdorns 18 ist in der Fig. 1 durch einen Doppelpfeil angedeutet. Die Antriebseinrichtung für diese Bewegungen der Zustell- und Betätigungseinrichtung 28 sind der Übersichtlichkeit halber nicht gezeigt. Es kann sich hierbei jedoch zum Beispiel um eine hydraulische, elektromechanische oder andere geeignete Antriebseinrichtung handeln. Die Zustell- und Betätigungseinrichtung 28 verfügt ferner über einen mit dem Brechsegment-Betätigungselement 26 zusammenwirkenden Aktuator 32, der mit einer Kraftmesseinrichtung 34 gekoppelt ist und ein genau definierte Brechkraft der jeweiligen Brechsegmente 24 sicherstellt.

Wie in Fig. 2 gezeigt, umfaßt die erfindungsgemäße Vorrichtung des Weiteren eine im wesentlichen am Umfang der Spreizeinrichtung, d.h. hier des Brechdorns 18, angeordnete und mit diesem in Axialrichtung A mitbewegbare Trenneinrichtung 36 zum Herstellen von zwei diametral gegenüberliegenden Bruchkerben 38 in allen fünf Bohrungen 6 des Gehäuseblocks 2 während des axialen Einführen des Brechdorns 18.

Die Position der herzustellenden Bruchkerben 38 ist der Fig. 4 zu entnehmen, die einen schematischen Querschnitt eines Lagerdeckelbereichs des in Fig. 1 dargestellten Gehäuseblocks 2 zeigt. Es ist zu beachten, daß die Fig. 2, 3 und 4 unterschiedliche Maßstäbe besitzen.

Die Trenneinrichtung 36 ist im vorliegenden Ausführungsbeispiel als Räumeinrichtung 36 ausgestaltet und umfaßt zwei an einem bezogen auf die axiale Einführrichtung vorderen Abschnitt des Brechdorns 18 angeordnete Räumwerkzeuge 40. Diese Räumwerkzeuge 40 sind entsprechend der Anordnung und radialen Erstreckung der herzustellenden Bruchkerben 38 einander diametral gegenüberliegend am Umfang des Brechdorns 18 positioniert und ragen mit ihrer jeweiligen Schneide leicht radial über den Umfang des Brechdorns 18 hinaus. Dies ist besonders gut aus der Fig. 3 ersichtlich, die eine schematische Frontalansicht des Brechdorns von Fig. 2 zeigt.

Auch bezogen auf die Längsrichtung des Brechdorns 18, d.h. in Richtung der Lagerachse A, liegen sich die beiden Räumwerkzeuge 40 genau gegenüber. Für bestimmte Anwendungszwecke können sie jedoch ebenso in Längsrichtung gegeneinander versetzt angeordnet sein. Die Geometrie einer jeweiligen Schneide ist der Geometrie der herzustellenden Bruchkerbe 38 angepaßt.

Die Räumwerkzeuge 40 sind darüber hinaus in der Art einer Wendeschneidplatte als Wechselwerkzeuge ausgebildet und jeweils in einer im vorderen Endbereich des Brechdorns 18 vorgesehenen Werkzeughalterung bzw. Werkzeugaufnahme 42 lösbar aber örtlich fixiert befestigt, so daß sie bei Verschleiß, Bruch oder zur Wartung leicht austauschbar sind. Die Werkzeughalterung umfaßt hier eine Aussparung 44 für das Räumwerkzeug 40, ein Klemmstück 46 und eine Verschraubung 48, mit der das Klemmstück 46 an das Räumwerkzeug 40 anpreßbar . und dieses somit sicher am Brechdorn 18 zu fixieren ist.

Infolge der zuvor beschriebenen Anordnung bildet der Brechdorn 18 zusammen mit der Räumeinrichtung 36 ein kombiniertes Räum-/Brechwerkzeug und fungiert in diesem Zusammenhang gleichzeitig als Werkzeugträger und Stößel für das Räumwerkzeug 40.

Es wird nun das mit der zuvor beschriebenen erfindungsgemäßen Vorrichtung durchführbare erfindungsgemäße Verfahren zum Bruchtrennen eines Werkstücks erläutert werden.

Zuerst wird das zu bearbeitende Werkstück, d.h. der Gehäuseblock 2, der, wie erwähnt, über fünf axial fluchtend hintereinander angeordnete ringartige integrale Lagerdeckel 4 verfügt, mittels der Spann- und Abstützvorrichtung 8 zum Bruchtrennen positioniert und fixiert. Zu diesem Zweck wird der Gehäuseblock 2 zunächst mit seiner den Lagerdeckeln 4 abgewandten Seite auf der ortsfesten unteren Werkstückaufnahme 10 angeordnet. Dann wird die Werkstückgegenhalterung 14 und die Lagerdeckelabstützung 16 zugestellt, so daß das Werkstück 2 für die nachfolgende Bearbeitung fest und sicher eingespannt ist und die Lagerdeckel 4 während des Brechvorgangs an einem Verdrehen gehindert werden.

Nun wird der Brechdorn 18, der sich in einem nicht aufgespreizten Zustand befindet, mittels der auf dem Schlitten 30 verfahrbaren Zustell- und Betätigungseinrichtung 28 beginnend bei dem in der Fig. 1 rechten Lagerdeckel 4 in axialer Richtung A in die von den jeweiligen Lagerdeckeln 4 umgebenen Bohrungen 6 eingeführt. Aufgrund der an dem vorderen Endabschnitt des Brechdorns 18 fest angeordneten Räumeinrichtung 36 befinden sich der Brechdorn 18 und die Räumeinrichtung bzw. ihre Räumwerkzeuge 40 in einem relativbewegungsfreien Zustand in Bezug zueinander. Die für den Räumvorgang erforderliche Relativbewegung zwischen dem Werkstück 2 und den Räumwerkzeugen 40 wird hier im vorliegenden Ausführungsbeispiel also durch die axiale Bewegung des Brechdorns 18 selbst erzeugt. Mittels der radial leicht überstehenden Räumwerkzeuge 40 werden während des Einführens des Brechdorns 18 folglich jeweils zwei diametral gegenüberliegende Bruchkerben 38 in der inneren Umfangsfläche 6.2 einer jeweiligen Bohrung 6 ausgeräumt. Während der Brechdorn 18 weiter in axialer Richtung durch die Bohrungen 6 voranschreitet, werden in einer Bohrung 6 nach der anderen die Bruchkerben 38 hergestellt, bis alle fünf Bohrungen 6 mit jeweils zwei Bruchkerben 38 versehen sind. Im vollständig eingeführten Zustand befindet sich der Brechdorn 18 in der in Fig. 1 dargestellten Position, wobei die Brechsegmente 24 jeweils genau in der Bohrung 6 ihres jeweils zugeordneten Lagerdeckels 4 zu liegen kommen.

Nachfolgend werden die Brechsegmente 24 mittels des Aktuators 32 und der Brechsegment-Betätigungselementes 26 aufgespreizt wodurch eine über die Kraftmesseinrichtung 34 kontrollierte Bruchtrennkraft auf die Lagerdeckel 4 ausgeübt wird. Bei Erreichen einer Grenzspannung in den Lagerdeckeln 4 werden diese beginnend an den Bruchkerben 38, die als Sollbruchstellen dienen und damit eine vorbestimmte Bruchebene festlegen, im wesentlichen gleichzeitig von dem verbleibenden Gehäuseblock 2 getrennt. Hierzu ist anzumerken, daß es je nach Ausgestaltungsform der Spreizeinrichtung bzw. des Brechdorns 18 natürlich ebenso möglich ist, die Lagerdeckel 4 nacheinander abzutrennen. Die ist besonders dann zweckmäßig, wenn eine große Anzahl von abzutrennenden Werkstückabschnitten vorliegt und/oder die Bruchtrennkraft gering gehalten werden soll.

Nach dem Bruchtrennen der Lagerdeckel 4 werden die Brechsegmente 24 wieder in ihre Ausgangsposition zurückbewegt. Dann wird die Lagerdeckelabstützung 16 zurückgeführt, der Brechdorn 18 aus dem Werkstück 2 zurückgezogen und schließlich die Werkstückgegenhalterung 14 zurückgefahren. Der bearbeitete Gehäuseblock 2 kann nun entnommen werden und die Vorrichtung für einen neuen Verfahrenszyklus mit einem neuen Gehäuseblock 2 bestückt werden.

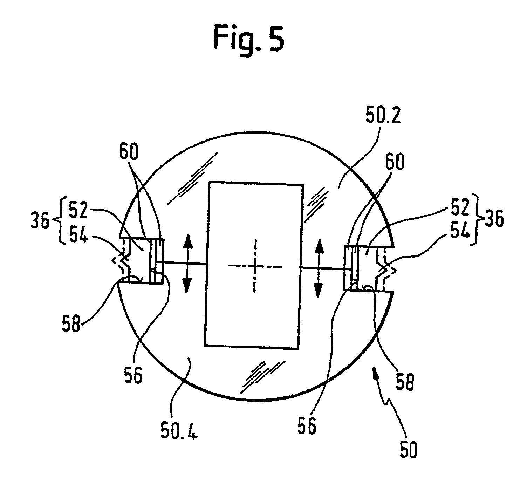

Fig. 5 zeigt eine schematische, stark vereinfachte Querschnittsansicht einer in der Vorrichtung von Fig. 1 verwendbaren Spreizeinrichtung 50 gemäß einer zweiten Ausführungsform. Auch diese Spreizeinrichtung 50 ist in der Art eines zweiteiligen Brechdornes 50 ausgestaltet und verfügt über zwei bezogen auf die Bohrungen 6 der Lagerdeckel 4 in einer radialen Richtung relativ zueinander bewegbare Brechdornhälfte 50.2 und 50.4. Abweichend von der Variante nach Fig. 2 ist bei diesem Brechdorn 50 die Trenn- bzw. Räumeinrichtung 36 relativ zum Brechdorn 50 beweglich angeordnet und erstreckt sich in Längsrichtung zwischen den Brechdornhälften 50.2 und 50.4. Die Räumeinrichtung 36 verfügt über zwei diametral gegenüberliegende stabförmige Räumwerkzeuge 52, die sich im Querschnitt des Brechdorns 50 gesehen jeweils in der Teilungsebene zwischen den beiden benachbarten Brechdornhälften 50.2 und 50.4 und im wesentlichen über die gesamte Brechdornlänge erstrecken und in Axialrichtung A (vergl. Fig. 1) vor und zurück beweglich sind.

Die zur Außenseite des Brechdorns 50 und damit zur inneren Umfangsfläche 6.2 einer jeweiligen Werkstückbohrung 6 weisende Seite eines Räumwerkzeugs 52 ist mit Schneiden 54 versehen, deren Geometrie auf die Geometrie der herzustellenden Bruchkerbe 38 abgestimmt ist. Die zur Innenseite des Brechdorns 50 weisende Rückseite 56 eines Räumwerkzeugs 52 ist in einer von den Brechdornhälften 50.2 und 50.4 gebildeten nutenartigen Räumwerkzeugführung 58 geführt. Bezogen auf jeden Lagerdeckel 4 des Gehäuseblocks 2 besitzt die Räumwerkzeugführung 58 gleichartige rampenförmige Längsabschnitte 60, die mit korrespondierenden rampenförmigen Längsabschnitten 60 auf der Rückseite 56 des Räumwerkzeugs 52 zusammenpassen. In einer Ausgangsposition liegen die beiden rampenförmigen Längsabschnitte 60, 60 der Räumwerkzeugführung 58 und des Räumwerkzeugs 52 so aneinander, daß die Schneiden 54 des Räumwerkzeugs 52 nicht über die radiale Umfangsfläche des Brechdorns 50 hinausragen. Werden die Räumwerkzeuge 52 jedoch über einen nicht dargestellten Betätigungsmechanismus in axialer Richtung bewegt, läuft das jeweilige Räumwerkzeug 52 gleichzeitig auf den rampenförmigen Längsabschnitten 60, 60 geringfügig und gleichmäßig radial nach außen, so daß die Schneiden 54 in radialer Richtung über den Umfang des Brechdorns 50 ausfahren (in Fig. 5 durch gestrichelte Linien dargestellt) und folglich wirksam werden können.

Mit einer erfindungsgemä&en Vorrichtung, die über einen solchen Brechdorn 50 verfügt, kann das erfindungsgemäße Verfahren derart ausgeführt werden, daß die Bruchkerben 38 in einer jeweiligen Bohrung 6 (unmittelbar) nach dem axialen Einführen des Brechdorns 50 hergestellt werden. Zu diesem Zweck wird der zuvor beschriebene Brechdorn 50 mit den radial zurückgezogenen Räumwerkzeugen 52 zunächst vollständig durch alle Bohrungen 6 hindurchgeführt, bis er eine der Fig. 1 entsprechende Position erreicht hat. Nach dem Einführen werden dann beide Räumwerkzeuge 52 gleichzeitig mittels des Betätigungsmechanismus in axialer Richtung bewegt, wobei die Schneiden 54 der Räumwerkzeuge 52 radial ausfahren und aufgrund der weiter fortbestehenden Axialbewegung die jeweils beiden Bruchkerben 38 in allen Bohrungen 6 im wesentlichen gleichzeitig ausräumen (alternativ dazu könnte natürlich auch zunächst das eine Räumwerkzeug 52 und dann das andere betätigt werden). Bei diesem Vorgang ist nicht nur eine Relativbewegung zwischen der Räumeinrichtung bzw. ihren Räumwerkzeugen 52 und dem Werkstück 2, sondern auch zwischen der Räumeinrichtung bzw. ihren Räumwerkzeugen 52 und dem Brechdorn 50 vorhanden. Nach Fertigstellung der Bruchkerben 38 können die Räumwerkzeuge 52 wieder in Ihre zurückgezogene Position zurückgefahren und die Lagerdeckel 4 in der bereits zuvor beschriebenen Art und Weise bruchgetrennt und anschließend der Brechdorn 50 entfernt werden.

Die Erfindung ist nicht auf die obigen Ausführungsbeispiele, die lediglich der allgemeinen Erläuterung des Kerngedankens der Erfindung dienen, beschränkt. Anstelle der oben beschriebenen Brechdornkonstruktionen kann selbstverständlich auch eine andere geeignete Spreizeinrichtung eingesetzt werden. Es ist zudem möglich, die Spreizeinrichtung und die Trenneinrichtung auch während des Einführens relativ zueinander zu bewegen. Die erfindungsgemäße Vorrichtung kann außerdem über Kontroll- und/oder Regel- und/oder Steuereinrichtungen verfügen.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 2: Werkstück / Gehäuseblock
- 4: Ringartige Werkstückäbschnitte 1 / Lagerdeckel
- 6: Bohrung in 4
- 6.2: Innere Umfangsfläche von 6
- 8: Spann- und Abstützvorrichtung
- 10: Werkstückaufnahme von 8
- 12: Schlitten von 8
- 14: Werkstückgegenhalterung von 8
- 16: Lagerdeckelabstützung von 8
- 18: Spreizeinrichtung / Brechdorn
- 18.2: Erste Brechdornhälfte
- 18.4: Zweite Brechdornhälfte
- 20: Vorderes Ende von 18
- 22: Führungsstücke von 18
- 24: Brechsegmente von 18
- 26: Brechsegment-Betätigungselement
- 28: Zustell- und Betätigungseinrichtung
- 30: Schlitten von 28
- 32: Aktuator
- 34: Kraftmesseinrichtung
- 36: Trenneinrichtung / Räumeinrichtung
- 38: Bruchkerben in 4 bzw. 6
- 40: Räumwerkzeuge von 36
- 42: Werkzeughaiterung
- 44: Aussparung von 42
- 46: Klemmstück von 42
- 48: Verschraubung von 42
- 50: Spreizeinrichtung / Brechdorn
- 50.2: Brechdornhälfte
- 50.4: Brechdornhälfte
- 52: Stabförmige Räumwerkzeuge
- 54: Schneiden von 52
- 56: Rückseite von 52
- 58: Nutenartige Räumwerkzeugführungen
- 60: Rampenförmige Längsabschnitte von 52 und 58

- A: Lagerachse / Axialrichtung

## Patentansprüche

1. Verfahren zum Bruchtrennen eines Werkstücks (2) mit einem oder mehreren axial (A) fluchtend hintereinander angeordneten ringartigen Werkstückabschnitten (4), umfassend folgende Schritte:
- Fixieren (8; 10, 14, 16) des Werkstückes (2) zum Bruchtrennen,
- axiales Einführen (28) von mindestens einer Spreizeinrichtung (18; 50) in mindestens eine durch einen jeweiligen ringartigen Werkstückabschnitt (4) gebildete Bohrung (6),
- Herstellen (36, 40; 52, 54) von mindestens einer Bruchkerbe (38) in wenigstens einer Bohrung (6) während und/oder nach dem axialen Einführen der Spreizeinrichtung (18; 50), und
- Aufspreizen der Spreizeinrichtung (18; 50) zum Bruchtrennen von mindestens einem ringartigen Werkstückabschnitt (4).

2. Verfahren nach Anspruch 1,
**dadurch gekennzeichnet, daß**
die Bruchkerben (38) der Bohrungen (6) der mehreren ringartigen Werkstückabschnitte (4) nacheinander hergestellt werden.

3. Verfahren nach Anspruch 1 oder 2,
**dadurch gekennzeichnet, daß**
die Bruchkerben (38) der Bohrungen (6) der mehreren ringartigen Werkstückabschnitte (4) im wesentlichen gleichzeitig hergestellt werden.

4. Verfahren nach einem oder mehreren der vorhergenannten Ansprüche,
**dadurch gekennzeichnet, daß**
das Herstellen der mindestens einen Bruchkerbe (38) mittels mindestens einer an der Spreizeinrichtung (18; 50) angeordneten und mit dieser in Axialrichtung (A) mitbewegbaren Trenneinrichtung (36; 40, 52, 54) erfolgt.

5. Verfahren nach einem oder mehreren der vorhergenannten Ansprüche,
**dadurch gekennzeichnet, daß**
sich die Spreizeinrichtung (18) und die Trenneinrichtung (36; 40) während des axialen Einführens (28) in einem relativbewegungsfreien Zustand in Bezug zueinander befinden.

6. Verfahren nach einem oder mehreren der vorhergenannten Ansprüche,
**dadurch gekennzeichnet, daß**
die Spreizeinrichtung (50) und die Trenneinrichtung (52, 54) während des Einführens (28) relativ zueinander bewegt werden.

7. Verfahren nach einem oder mehreren der vorhergenannten Ansprüche,
**dadurch gekennzeichnet, daß**
beim Herstellen der mindestens einen Bruchkerbe (38) nach dem axialen Einführen (28) der Spreizeinrichtung (50) eine Relativbewegung zwischen der Spreizeinrichtung (50) und der Trenneinrichtung (52, 54) erfolgt.

8. Verfahren nach einem oder mehreren der vorhergenannten Ansprüche,
**dadurch gekennzeichnet, daß**
mehrere ringartige Werkstückabschnitte (4) im wesentlichen gleichzeitig bruchgetrennt werden.

9. Verfahren nach einem oder mehreren der vorhergenannten Ansprüche,
**dadurch gekennzeichnet, daß**
mehrere ringartige Werkstückabschnitte (4) nacheinander bruchgetrennt werden.

10. Vorrichtung zum Bruchtrennen eines Werkstücks (2) mit einem oder mehreren axial (A) fluchtend hintereinander angeordneten ringartigen Werkstückabschnitten (4), umfassend:
- mindestens eine Spann- und Abstützvorrichtung (8; 10, 14, 16) zum Fixieren des Werkstückes (2) zum Bruchtrennen,
- mindestens eine Spreizeinrichtung (18; 50), die in wenigstens eine durch einen jeweiligen ringartigen Werkstückabschnitt (4) gebildete Bohrung (6) axial einführbar (28) und aufspreizbar (24) ist, und
- mindestens eine im wesentlichen am Umfang der Spreizeinrichtung (18; 50) angeordnete und mit dieser in Axialrichtung (A) mitbewegbare Trenneinrichtung (36, 40; 52, 54) zum Herstellen von wenigstens einer Bruchkerbe (38) in mindestens einer der Bohrung (38) während und/oder nach dem axialen (A) Einführen (28) der Spreizeinrichtung (18; 50).

11. Vorrichtung nach Anspruch 10,
**dadurch gekennzeichnet, daß**
die Trenneinrichtung (36, 40) an einem bezogen auf die axiale Einführrichtung (A) der Spreizeinrichtung (18) vorderen Abschnitt der Spreizeinrichtung (18) angeordnet ist.

12. Vorrichtung nach Anspruch 10 oder 11,
**dadurch gekennzeichnet, daß**
sich die Trenneinrichtung (52, 54) in Längsrichtung der Spreizeinrichtung (50) erstreckt.

13. Vorrichtung nach einem oder mehreren der Ansprüche 10 bis 12,
**dadurch gekennzeichnet, daß**
die Trenneinrichtung (36) mindestens ein Trennwerkzeug (40; 52, 54) aufweist.

14. Vorrichtung nach Anspruch 13,
**dadurch gekennzeichnet, daß**
die Trenneinrichtung (36) zwei Trennwerkzeuge (40; 52, 54) aufweist, die einander diametral gegenüberliegend angeordnet sind.

15. Vorrichtung nach Anspruch 13 oder 14,
**dadurch gekennzeichnet, daß**
das mindestens eine Trennwerkzeug (40) örtlich fixiert in einer in der Spreizeinrichtung (18) vorgesehenen Werkzeughalterung (42, 44, 46, 48) befestigt ist.

16. Vorrichtung nach einem oder mehreren der Ansprüche 13 bis 15,
**dadurch gekennzeichnet, daß**
das mindestens eine Trennwerkzeug (40; 52) ein Wechsel-Trennwerkzeug ist.

17. Vorrichtung nach einem oder mehreren der Ansprüche 10 bis 16,
**dadurch gekennzeichnet, daß**
die Trenneinrichtung eine Räumeinrichtung (36) und das Trennwerkzeug ein Räumwerkzeug (40; 52, 54) ist.

18. Vorrichtung nach einem oder mehreren der Ansprüche 10 bis 17,
**dadurch gekennzeichnet, daß**
die Trenneinrichtung (36) und/oder ihr Trennwerkzeug (52) relativ zu der Spreizeinrichtung (50) beweglich angeordnet sind.

19. Vorrichtung nach einem oder mehreren der Ansprüche 10 bis 18,
**dadurch gekennzeichnet, daß**
die Spreizeinrichtung wenigstens einen Spreizdorn (18; 50) umfaßt, der
- mit mindestens zwei bezogen auf die Bohrung (6) in einer radialen Richtung relativ zueinander bewegbaren Spreizdornhälften (50.2, 50.4) und/oder
- mit mindestens einem bezogen auf die Bohrung (6) in radialen Richtung bewegbaren Brechelement (24) versehen ist.

20. Vorrichtung nach Anspruch 19,
**dadurch gekennzeichnet, daß**
sich die Trenneinrichtung (52) in Längsrichtung zwischen den mindestens zwei Spreizdornhälften (50.2, 50.4) erstreckt.

## Claims

1. Method for the fracture separation of a work piece (2) with one or more ring-like work piece sections (4) arranged one behind the other in axial (A) alignment, including the following steps:
- fixing (8; 10, 14, 16) the work piece (2) for fracture separation,
- axial insertion (28) of at least one expanding device (18; 50) in at least one bore (6) formed by a respective ring-like work piece section (4),
- making (36, 40; 52, 54) at least one fracture notch (38) in at least one bore (6) during and/or after axial insertion of the expanding device (18; 50), and
- expanding the expanding device (18; 50) for fracture separation of at least one ring-like work piece section (4).

2. Method according to claim 1, **characterised in that** the fracture notches (38) of the bores (6) of the plurality of ring-like work piece sections (4) are made one after the other.

3. Method according to claim 1 or 2, **characterised in that** the fracture notches (38) of the bores (6) of the plurality of ring-like work piece sections (4) are made substantially simultaneously.

4. Method according to one or more of the aforementioned claims, **characterised in that** the at least one fracture notch (38) is made by means of at least one separating device (36; 40, 52, 54) which is arranged on the expanding device (18; 50) and is movable with the latter in the axial direction (A).

5. Method according to one or more of the aforementioned claims, **characterised in that** the expanding device (18) and the separating device (36; 40) are in a state free from relative movement in relation to each other during axial insertion (28).

6. Method according to one or more of the aforementioned claims, **characterised in that** the expanding device (50) and the separating device (52, 54) are moved relative to each other during insertion (28).

7. Method according to one or more of the aforementioned claims, **characterised in that** while the at least one fracture notch (38) is being made, after axial insertion (28) of the expanding device (50), a relative movement is effected between the expanding device (50) and the separating device (52, 54).

8. Method according to one or more of the aforementioned claims, **characterised in that** several ring-like work piece sections (4) are fracture-separated substantially simultaneously.

9. Method according to one or more of the aforementioned claims, **characterised in that** several ring-like work piece sections (4) are fracture-separated one after the other.

10. Apparatus for the fracture separation of a work piece (2) with one or more ring-like work piece sections (4) arranged one behind the other in axial (A) alignment, including:
- at least one clamping and supporting device (8; 10, 14, 16) for fixing the work piece (2) for fracture separation,
- at least one expanding device (18; 50) which is axially insertable in at least one bore (6) formed by a respective ring-like work piece section (4) and expandable (24), and
- at least one separating device (36, 40; 52, 54) which is arranged substantially at the circumference of the expanding device (18; 50) and movable with the latter in the axial direction (A), for making at least one fracture notch (38) in at least one bore (38) during and/or after axial (A) insertion (28) of the expanding device (18; 50).

11. Apparatus according to claim 10, **characterised in that** the separating device (36, 50) is arranged on a front section of the expanding device (18), referred to the axial direction (A) of insertion of the expanding device (18).

12. Apparatus according to claim 10 or 11, **characterised in that** the separating device (52, 54) extends in the longitudinal direction of the expanding device (50).

13. Apparatus according to one or more of claims 10 to 12, **characterised in that** the separating device (36) comprises at least one separating tool (40; 52, 54).

14. Apparatus according to claim 13, **characterised in that** the separating device (36) comprises two separating tools (40; 52, 54) which are arranged diametrically opposite each other.

15. Apparatus according to claim 13 or 14, **characterised in that** the at least one separating tool (40) is mounted in a fixed position in a tool holder (42, 44, 46, 48) provided in the expanding device (18).

16. Apparatus according to one or more of claims 13 to 15, **characterised in that** the at least one separating tool (40; 52) is an exchangeable separating tool.

17. Apparatus according to one or more of claims 10 to 16, **characterised in that** the separating device is a broaching device (36) and the separating tool is a broaching tool (40; 52, 54).

18. Apparatus according to one or more of claims 10 to 17, **characterised in that** the separating device (36) and/or its separating tool (52) are arranged so as to be movable relative to the expanding device (50).

19. Apparatus according to one or more of claims 10 to 18, **characterised in that** the expanding device includes at least one expansion mandrel (18; 50) which is provided
- with at least two expansion mandrel halves (50.2, 50.4) movable relative to each other in a radial direction referred to the bore (6)
and/or
- with at least one fracture element (24) movable in a radial direction referred to the bore (6).

20. Apparatus according to claim 19, **characterised in that** the separating device (52) extends in a longitudinal direction between the at least two expansion mandrel halves (50.2, 50.4).

## Revendications

1. Procédé pour la division par rupture d'une pièce d'ouvrage (2) , avec un ou plusieurs tronçons de pièces (4) du genre d'anneaux, disposés l'un derrière l'autre en alignement axial (A), comprenant les étapes suivantes :
- fixation (8; 10, 14, 16) de la pièce d'ouvrage (2) pour la division par rupture,
- insertion axiale (28) d'au moins un dispositif écarteur (18; 50) en au moins un perçage (6) formé par un tronçon de pièce (4) du genre d'anneau spécifique,
- formation (36, 40; 52, 54) d'au moins une entaille de rupture (38) en au moins un perçage (6) pendant et/ou après l'insertion axiale du dispositif écarteur (18; 50), et
- ouverture par écartement du dispositif écarteur (18; 50), pour la division par rupture d'au moins un tronçon de pièce (4) du genre d'anneau.

2. Procédé selon la revendication 1, **caractérisé en ce que** les entailles de rupture (38) des perçages (6) de la pluralité de tronçons de pièce (4) du genre d'anneaux sont formées les unes après les autres.

3. Procédé selon la revendication 1 ou 2, **caractérisé en ce que** les entailles de rupture (38) des perçages (6) de la pluralité de tronçons de pièce (4) du genre d'anneaux sont formées pratiquement simultanément.

4. Procédé selon l'une ou plusieurs des revendications précédentes, **caractérisé en ce que** la formation de la au moins une entaille de rupture (38) se fait à l'aide d'au moins un dispositif séparateur (36; 40, 52, 54) disposé sur le dispositif écarteur (18; 50) et susceptible d'être entraîné avec celui-ci en direction axiale (A).

5. Procédé selon l'une ou plusieurs des revendications précédentes, **caractérisé en ce que** le dispositif écarteur (18) et le dispositif séparateur (36; 40), pendant l'insertion axiale (28), se trouvent en un état exempt de tout déplacement relatif l'un par rapport à l'autre.

6. Procédé selon l'une ou plusieurs des revendications précédentes, **caractérisé en ce que** le dispositif écarteur (50) et le dispositif séparateur (52, 54) sont déplacés l'un par rapport à l'autre pendant l'insertion (28).

7. Procédé selon l'une ou plusieurs des revendications précédentes, **caractérisé en ce que**, lors de la formation de la au moins une entaille (38), après insertion axiale (28) du dispositif écarteur (50), on effectue un déplacement relatif entre le dispositif écarteur (50) et le dispositif séparateur (52, 54).

8. Procédé selon l'une ou plusieurs des revendications précédentes, **caractérisé en ce que** plusieurs tronçons de pièce (4) du genre d'anneaux sont divisés par rupture pratiquement simultanément.

9. Procédé selon l'une ou plusieurs des revendications précédentes, **caractérisé en ce que** plusieurs tronçons de pièce (4) du genre d'anneaux sont divisés par rupture les uns après les autres.

10. Dispositif de division par rupture d'une pièce d'ouvrage (2) avec un ou plusieurs tronçons de pièce (4) du genre d'anneaux, disposés les uns derrière les autres en alignement axial (A), comprenant :
- au moins un dispositif de serrage et d'appui (8; 1, 14, 16) pour la fixation de la pièce (2) pour la division par rupture,
- au moins un dispositif écarteur (18; 50), susceptible d'être introduit axialement (28) et d'être ouvert par écartement (24), dans au moins un perçage (6) formé par un .tronçon de pièce (4) du genre d'anneau respectif, et
- au moins un dispositif séparateur (36, 40; 52, 54), disposé sensiblement à la périphérie du dispositif écarteur (18; 50) et susceptible d'être entraîné conjointement avec celui-ci en direction axiale (A), pour former au moins une entaille de rupture (38) en au moins l'un des perçages (38) pendant et/ou après l'insertion (28) axiale (A) du dispositif écarteur (18; 50).

11. Dispositif selon la revendication 10, **caractérisé en ce que** le dispositif séparateur (36, 40) est disposé sur un tronçon du dispositif écarteur (18) situé à l'avant par rapport à la direction d'insertion axiale (A) du dispositif écarteur (18).

12. Dispositif selon la revendication 10 ou 11, **caractérisé en ce que** le dispositif séparateur (52, 54) s'étend dans la direction longitudinale du dispositif écarteur (50).

13. Dispositif selon l'une ou plusieurs des revendications 10 à 12, **caractérisé en ce que** le dispositif séparateur (36) présente au moins un outil séparateur (40; 52, 54).

14. Dispositif selon la revendication 13, **caractérisé en ce que** le dispositif séparateur (36) présente deux outils séparateurs (40; 52, 54), disposés diamétralement les uns à l'opposé des autres.

15. Dispositif selon la revendication 13 ou 14, **caractérisé en ce que** le au moins un dispositif séparateur (40) est fixé localement dans une fixation d'outil (42, 44, 46, 48) prévue dans le dispositif écarteur (18).

16. Dispositif selon l'une ou plusieurs des revendications 13 à 15, **caractérisé en ce que** le au moins un outil séparateur (40; 52) est un outil séparateur interchangeable.

17. Dispositif selon l'une ou plusieurs des revendications 10 à 16, **caractérisé en ce que** le dispositif séparateur est un dispositif de chambrage (36) et l'outil séparateur est un outil de chambrage (40; 52, 54).

18. Dispositif selon l'une ou plusieurs des revendications 10 à 17, **caractérisé en ce que** le dispositif séparateur (36) et/ou son outil séparateur (52) est/sont disposé(s) de façon mobile par rapport au dispositif écarteur (50).

19. Dispositif selon l'une ou plusieurs des revendications 10 à 18, **caractérisé en ce que** le dispositif séparateur comprend au moins un mandrin écarteur (18; 50), qui
- est muni d'au moins deux demi-mandrins écarteurs (50.2, 50.4), déplaçables l'un par rapport l'autre en une direction radiale par rapport au perçage (6) et/ou
- d'au moins un élément briseur (24) déplaçable en direction radiale par rapport au perçage (6).

20. Dispositif selon la revendication 19, **caractérisé en ce que** le dispositif séparateur (52) s'étend en direction longitudinale entre les au moins deux demi-mandrins écarteurs (50.2, 50.4).
